# FASCICULE DE BREVET EUROPEEN

(11) **EP 2 880 558 B1**
(45) Date de publication et mention de la délivrance du brevet: **04.05.2022**
(21) Numéro de dépôt: 13744562.3
(22) Date de dépôt: 01.08.2013
(51) Int. Cl.: G06Q 30/02

(54) **PROCÉDÉ DE TRAITEMENT DE DONNÉES POUR ANALYSE SITUATIONNELLE**
VERFAHREN ZUR DATENVERARBEITUNG FÜR SITUATIONSBEDINGTE ANALYSE
DATA-PROCESSING METHOD FOR SITUATIONAL ANALYSIS

(30) Priorité: 01.08.2012 FR 1257487
(43) Date de publication de la demande: 10.06.2015
(73) Titulaire: Netwave, 31670 Labège (FR)
(72) Inventeur: MALLE, Jean-Pierre, F-91240 Saint-Michel s/ Orge (FR); MARTY, Henri, F-31850 Montrabe (FR)
(74) Mandataire: Regimbeau
(86) Numéro de dépôt international: PCT/EP2013/066216
(87) Numéro de publication internationale: WO 2014/020121

(56) Documents cités:
- US-A1- 2011 029 665
- FAWCETT T ET AL: "COMBINING DATA MINING AND MACHINE LEARNING FOR EFFECTIVE USER PROFILING", PROCEEDINGS. INTERNATIONAL CONFERENCE ON KNOWLEDGE DISCOVERY ANDDATA MINING, 2 août 1996 (1996-08-02), pages 8-13, XP000909147,
- GEHANI N H ET AL: "Event specification in an active object-oriented database", PROCEEDINGS OF THE ACM SIGMOD INTERNATIONAL CONFERENCE ON MANAGEMENT OF DATA. SAN DIEGO, JUNE 2 - 5, 1992; [PROCEEDINGS OF THE ACM SIGMOD INTERNATIONAL CONFERENCE ON MANAGEMENT OF DATA], NEW YORK, ACM, US, 1 June 1992 (1992-06-01), pages 81-90, XP058323264, DOI: 10.1145/130283.130300 ISBN: 978-0-89791-521-2

## Description

### DOMAINE TECHNIQUE GENERAL

La présente invention concerne le domaine de l'analyse de données utilisateur pour le e-commerce.

Plus précisément elle concerne un procédé de traitement de données de connexion à une plateforme d'un site Internet, le procédé étant dédié notamment aux traitements statistiques, au forage de données ("datamining" dans la terminologie anglo-saxonne), à la conception d'outils d'aide à la décision, aux diagnostics, à la prévision ou à l'approximation, à la conception de simulateurs, de systèmes d'apprentissage automatique ou d'aide à l'apprentissage et d'une manière générale à la conception de systèmes d'analyse de situations ou analyse situationnelle.

### ETAT DE L'ART

Le développement d'internet a entrainé l'essor du commerce en ligne, ou « e-commerce ». De nombreux services allant de la vente de produits à la mise en relation d'utilisateurs en passant par la banque ou la presse sont ainsi proposés sur les réseaux.

Le e-commerce a entraîné dans son sillage l'apparition du « e-business », c'est-à-dire tout ce qui peut être mis en œuvre en amont pour concrétiser une transaction et par la suite assurer la fidélisation client, en particulier le marketing électronique.

En effet, bien que la vente en ligne permette théoriquement la personnalisation à l'extrême de la relation-client, l'anonymat qui règne sur Internet empêche l'application des règles marketing traditionnelles, qui sont basées sur le ciblage et la différentiation des clients.

Comprendre l'internaute est donc essentiel. Certains acteurs du e-commerce proposent ainsi à leurs client de remplir des profils permettant de mieux les identifier, ce afin de leur offrir une approche personnalisée, comme le ferait un vendeur dans un magasin. Cette solution est toutefois contraignante pour l'internaute, lequel est en outre souvent réticent à donner des informations personnelles. La publication US 2011/029665 A1 divulgue un système qui détecte quand un ensemble des valeurs de données représentent une situation de référence parmi des situations de référence.

Des techniques connues proposent la collecte de « données comportementales » de l'internaute, par exemple via le contenu de son historique, afin de mieux l'identifier et de personnaliser les contenus en particulier publicitaire qu'il reçoit. Ces techniques n'apportent toutefois qu'une compréhension partielle de l'internaute, et ne permettent d'en déduire que peu d'informations.

La présente invention propose un procédé de traitement de données de connexion alternatif qui vise à la détermination de ce que l'on appelle les « situations » d'utilisateurs connectés à une plateforme d'un site Internet, afin de les analyser pour obtenir des données et prédire d'autres situations, sans être dépendant d'un modèle ou d'une structure d'implémentation physique ou logique.

### PRESENTATION DE L'INVENTION

La présente invention propose un procédé de traitement de données par un serveur selon la revendication 1.

Des caractéristiques optionnelles sont selon les revendications 2-6.

Selon un deuxième aspect, l'invention concerne un serveur comprenant au moins une unité de traitement de données et des moyens de stockage de données, ladite au moins une unité de traitement étant configurée pour la mise en œuvre du procédé selon le premier aspect de l'invention lors de la connexion d'un utilisateur à une plateforme d'un site internet via un équipement, le serveur étant en connexion avec ladite plateforme.

### BREVE DESCRIPTION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 est un schéma d'une architecture réseau dans laquelle s'inscrit l'invention ;
- la figure 2 est un diagramme représentant schématiquement les étapes du procédé de traitement de données de connexion selon l'invention ;
- la figure 3 est un schéma d'un mode de réalisation d'un système de traitement de données de connexion selon l'invention ;
- la figure 4 représente un module de traitement d'un système de traitement de données de connexion selon l'invention ;
- la figure 5 est un schéma d'un module de traitement immédiat d'un mode de réalisation d'un système de traitement de données de connexion selon l'invention ;
- la figure 6 est un schéma d'un module de traitement différé d'un mode de réalisation d'un système de traitement de données de connexion selon l'invention.

### DESCRIPTION DETAILLEE D'UN MODE DE REALISATION PREFERE

### Situations

Contrairement à tous les procédés de traitement connus, le procédé de traitement de données selon l'invention est basé comme mentionné précédemment sur l'analyse de « situations » complètes, et non sur une simple liste de paramètres.

Dans la suite de la présente description, on décrira plus particulièrement l'application du procédé au domaine mentionné précédemment du e-commerce (dans ce cas lesdites données sont des données de connexion à une plateforme d'un site Internet), mais on comprendra qu'il peut être transposé au traitement de données utilisateur de façon générale sur un poste de travail. Les données peuvent en effet être les e-mails de l'utilisateur, ses paramètres système, etc. Le traitement de données de connexion donne d'excellents résultats en terme d'identification de situation grâce au volume et à la diversité de telles données.

On entend ici par "situation" d'un utilisateur une information plus ou moins complexe et plus ou moins floue décrivant les notions d'ordre psychologique, sociologique de l'utilisateur et sa scène situationnelle (l'ensemble des situations des autres utilisateurs connectés). Une situation peut être nommée par un terme porteur de sens pour le e-commerçant, comme par exemple « butineuse de l'après-midi » pour désigner des femmes qui surfent sur internet après déjeuner sans idées préconçues.

L'analyse situationnelle ouvre ainsi de grandes perspectives dans de nombreux domaines économiques utilisant des outils d'analyse, de prédiction et de simulation. Des processeurs d'analyse situationnelle (voir par exemple la demande de brevet français FR2962823) sont capables de façon autonome de recevoir en entrée un ou plusieurs flux situationnels, d'en extraire des situations, de distinguer les éléments importants et de leur appliquer en continu des traitements, de détecter des phénomènes et de prévoir des évolutions de solutions, notamment par induction.

Les avantages sont multiples : comme on va le voir les systèmes situationnels ne sont pas contraints par des modèles ou des architectures d'implémentation, et s'adaptent donc en permanence. Ils sont capable, à l'instar du cerveau humain, de se concentrer sur l'essentiel en gérant leurs ressources. Enfin, leurs possibilités apparaissent bien plus universelles que celles de n'importe quel système expert actuel, cloisonné dans un domaine particulier.

Le principe du procédé de traitement de données (le traitement étant réalisé par un serveur comprenant au moins une unité de traitement de données et des moyens de stockage de données, le serveur étant dans le cas du traitement de données de connexion à une plateforme d'un site Internet en connexion réseau avec ladite plateforme) selon l'invention est ainsi d'identifier par un premier mécanisme la situation d'un ou plusieurs utilisateurs, puis de traiter par un deuxième mécanisme les situations collectés dans une deuxième temps. Les utilisateurs concernés sont dans le cas du-e-commerce des utilisateurs connectés à ladite plateforme via un équipement, voire tous les internautes visiteurs si les ressources du serveur le permettent (voir plus loin).

Ce traitement peut avoir plusieurs destinataires et de nombreuses finalités, comme il sera également expliqué plus loin.

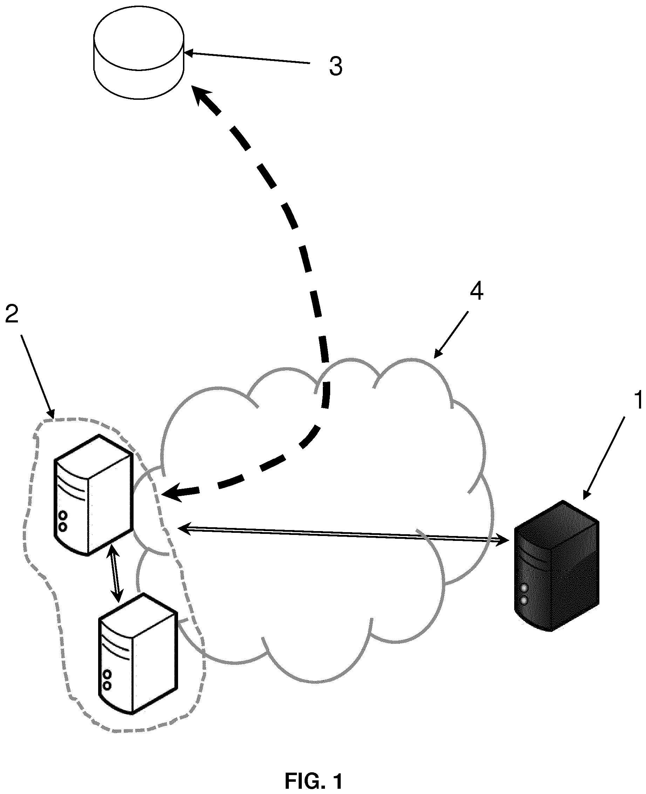

La figure 1 représente l'architecture réseau dans laquelle l'invention s'inscrit. Un équipement 3 (on comprendra qu'il peut s'agit de toute sorte d'équipement informatique sur lequel un utilisateur peut accéder à Internet, du poste de travail au terminal mobile tel qu'un smartphone ou une tablette tactile) est connecté à la plateforme 2 d'un site internet via le réseau internet 4. Le serveur 1 comprenant au moins une unité de traitement de données et des moyens de stockage de données pour la mise en œuvre du procédé est en connexion réseau avec ladite plateforme 2.

Il est important de comprendre que le terme « plateforme » désigne un ou plusieurs serveurs interconnectés du site internet sur lequel sont hébergées la ou les pages de site internet que l'utilisateur est en train de consulter. Le serveur 1 qui réalise le traitement peut être l'un de ces serveurs qui composent la plateforme 2. L'équipement utilisateur 3 est dans tous les connecté directement ou indirectement (via la plateforme 2) à travers le réseau internet au serveur 1 qui met qui en œuvre le procédé. Il est à noter que la connexion entre le serveur de traitement 1 et la plateforme 2 peut être locale, mais alternativement rien n'interdit qu'elle repasse par le réseau internet 4.

### Premier mécanisme : Identification d'une situation

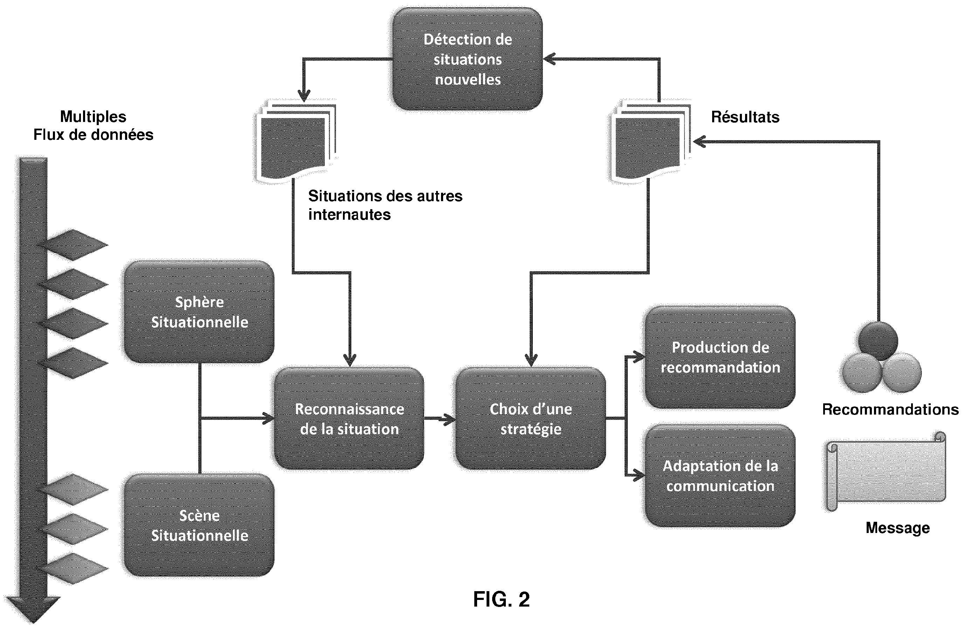

Comme le montre la figure 2, l'identification de la situation d'un utilisateur connecté à ladite plateforme se fait parmi une liste de situations de référence, lesquelles peuvent être soit prédéfinies à partir de l'observation des comportements des internautes, soit de façon particulièrement avantageuse automatiquement générées par un autre mécanisme qui sera décrit plus loin.

Pour ce faire, le mécanisme d'identification de situation du procédé selon l'invention utilise des «déclencheurs». Les déclencheurs, mieux connus sous l'appellation anglo-saxonne « triggers », sont des modules logiciels qui sont aptes à s'activer et provoquer un traitement particulier en fonction d'événements prédéfinis.

Les triggers peuvent être de nombreux types. Dans un premier type, l'évènement est une action de l'internaute comme un clic de consultation, un clic de sélection, etc. Dans un second type l'évènement est l'expiration d'un délai, par exemple après la dernière visite de l'internaute, ou par rapport à la précédente activation du trigger (dans ce dernier cas il s'active à une fréquence fixe, par exemple toutes les heures). On comprendra que de nombreuses autres configurations sont possibles.

A l'activation d'un trigger donné, les moyens de traitement de données du serveur 1 déclenchent une tentative de détermination de l'état d'au moins un « indice ». Les indices sont divers éléments porteurs de signification pour une situation. Certains indices concernent la «scène situationnelle », c'est-à-dire l'ensemble ou un sous-ensemble des situations des internautes connectés qui se déroulent concomitamment. Il s'agit par exemple de l'heure, de la météo, etc. Alternativement, certains indices concernent la « sphère situationnelle », c'est-à-dire la situation particulière de l'internaute. Il s'agit alors par exemple de l'âge, le genre, la taille de l'internaute, sa navigation (rapide, hésitante, etc.) son état (pressé, en recherche, etc.). Les indices sont donc relatifs à des données personnelles dudit utilisateur connecté à la plateforme 2 et/ou relatifs à des données générales. La combinaison de ces deux « zones » situationnelles offre en pratique de bons résultats pour la détermination fiable de la situation d'un utilisateur.

Naturellement, certains indices relatifs à des résultats espérés (par exemple la conclusion ou non d'une transaction) sont spécialement impliqués, en particulier en vue de l'analyse des situations.

La ou les unités de traitement du serveur 1 disposent ainsi d'une collection d'indices observables prédéterminée. Il est à noter qu'observable ne signifie pas forcément déterminable. Une tentative de détermination de l'état d'un indice peut ne pas être fructueuse. Par exemple l'âge de l'internaute n'est pas forcément accessible. L'indice est alors considéré comme « indiscernable ». Il n'est toutefois pas exclu qu'une tentative ultérieure (via le même trigger ou un autre) soit cette fois couronnée de succès.

Une liste des indices à tenter de déterminer est associée à chaque trigger. Si ce trigger est activé, ce seront ces indices et seulement ces indices dont l'état sera observé. A titre d'exemple, un trigger périodique pourra tenter de déterminer la météo ou le nombre de clics par seconde de l'utilisateur. Alternativement, un trigger lié au clic sur le bouton « envoyer » à la fin d'un formulaire pourra tenter de déterminer l'âge et le genre de l'utilisateur en fonction du texte saisi.

En fonction des résultats de ladite tentative de détermination de l'état d'au moins un indice, la ou les unités de traitement génèrent et stockent sur les moyens de stockage du serveur 1 une signature situationnelle de l'utilisateur (si une situation situationnelle existe déjà, elle est seulement mise à jour).

La signature situationnelle d'un utilisateur correspond à l'ensemble des données relatives aux indices, lesquelles permettent de caractériser la situation de l'utilisateur.

Avantageusement, une signature situationnelle est en particulier composée d'une pluralité d'unités d'information chacune étant associée à un indice (avantageusement on trouve deux parties dans une signature situationnelle, les unités étant appelées respectivement « thresholds » si l'indice associé est relatif à la scène situationnelle, et « trackers » si l'indice associé est relatif à la sphère situationnelle), chaque unité d'information pouvant prendre au moins trois valeurs dont une première valeur si l'état déterminé de l'indice associé correspond à un état de référence (valeur « 1 »), une deuxième valeur si l'état déterminé de l'indice associé ne correspond pas à l'état de référence (valeur « 0 »), et une troisième valeur (valeur « X ») si l'état de l'indice associé n'a pas pu être déterminé (que ce soit parce qu'aucune tentative de détermination n'a été faite pour l'indice associé, ou parce que la tentative qui a suivi le déclenchement du trigger n'a pas réussi). Chaque unité d'information est alors un «bit» à trois valeurs.

On comprendra que les notations 0, 1 et X sont purement illustratives et que l'homme du métier pourra choisir la représentation de données de son choix. En particulier, on peut envisager utiliser des unités d'information n'ayant pas un nombre déterminé de valeurs et aptes à stocker par exemple des nombres, des chaines de caractère, etc. On verra toutefois plus loin l'intérêt d'avoir des unités d'information à n états. En utilisant la notation définie précédemment, 1X10 01XX est un exemple de signature situationnelle à 8 unités d'information.

On note en outre que bien qu'ici on ne distingue pas les cas « aucune détermination tentée » / « détermination tentée mais infructueuse » (même valeur « X »), l'information selon laquelle une détermination a été tentée peut être alternativement prise en compte. En effet, bien que l'information que constitue l'état de l'indice n'ait pas pu être obtenue, le fait que la tentative ait échoué peut être porteur d'information. Par exemple cela peut signifier que l'utilisateur a volontairement (voire involontairement) occulté des pans de son profil et donc qu'il peut être quelqu'un cherchant à augmenter sa confidentialité internet.

Il est à noter que certains trackers ou thresholds peuvent s'appuyer sur des intégrateurs de loi de distribution, par exemple de gauss ou de poisson, afin de leur conférer un caractère rémanent. En d'autres termes, les intégrateurs « prévoient » l'état que doit avoir l'indice en fonction des précédentes observations, ce qui évite à court terme la nécessité de redéclencher une tentative de détermination lorsque la précédente s'est faite il y a peu.

La signature situationnelle de l'utilisateur est alors comparée avec une pluralité de « masques ». Chaque masque est associé à une situation de référence, et correspond à un espace de signatures situationnelles. Pour cela, chaque masque est constitué comme une signature d'une pluralité d'unités d'informations, pouvant prendre les valeurs 0, 1, X, mais aussi une quatrième valeur (notée « A ») si l'unité d'information peut être quelconque. L'état de certains indices n'est en effet pas caractéristique de certaines situations.

Par exemple 10A0 AAX1 est un masque à 8 unités d'information qui regroupe les signatures suivantes: 1000 00X1, 1000 01X1, 1000 0XX1, 1000 10X1, 1000 11X1, 1000 1XX1, 1000 X0X1, 1000 X1X1, 1000 XXX1, 1010 00X1, 1010 01X1, 1000 0XX1,1010 10X1, 1010 11X1, 1010 1XX1, 1010 X0X1, 1010 X1X1, 1010 XXX1, 10X0 00X1, 10X0 01X1, 10X0 0XX1, 10X0 10X1, 10X0 11X1, 10X0 1XX1, 10X0 X0X1, 10X0 X1X1, 10X0 XXX1.

La comparaison entre la signature et un masque se fait alors facilement grâce à des portes logiques (on compare chaque unité du masque n'ayant pas pour valeur « A » avec l'unité correspondante sur la signature grâce à XOR, et on applique AND sur les résultats de ces comparaisons). Lorsqu'un masque correspond, on identifie la situation dudit utilisateur connecté à la plateforme 2 comme étant la situation de référence associée à l'au moins un masque contenant ladite signature situationnelle.

Il est à noter qu'une pluralité de masques est avantageusement stockée sur les moyens de stockage du serveur 1, et qu'il n'est pas impossible que certains des masques aient des portées qui se recoupent, en d'autres termes qu'il n'y ait pas unicité du masque correspondant à une situation donnée. Pour résoudre cette difficulté, les masques sont avantageusement testés itérativement selon un roulement : si le test est positif, la situation de référence associée au masque est retenue, sinon le masque suivant est testé. Lorsqu'un nouveau trigger est activé, le même masque de situation est retesté en premier afin de maintenir si possible la stabilité de la situation actuelle.

A l'issue de cette première phase du procédé, on dispose donc d'une situation identifiée comme étant la situation de l'utilisateur.

### Deuxième mécanisme : Traitement de la situation

Le deuxième mécanisme du procédé selon l'invention consiste en une analyse de la situation identifiée de l'utilisateur par des moyens physiques ou logiques d'analyse situationnelle du serveur 1 de sorte à obtenir des données traitées, qui vont être porteuses de sens pour l'utilisateur, un gestionnaire du site internet, etc. Les moyens d'analyse situationnelle peuvent consister en une application exécutée par les moyens de traitement de données du serveur 1 (on peut envisager un processeur multi-cœur dont des coeurs sont dédiés à cette analyse situationnelle, voir plus loin).

Pour cela, chaque situation de référence est associée à au moins une « stratégie » (avantageusement 1 à 3), c'est-à-dire un ensemble composé d'un ou plusieurs moteurs situationnels (ainsi que les éventuels paramètres de ces moteurs) et de contenus de messages, c'est-à-dire des textes, des contenus graphiques (incluant des images, des vidéos, etc.), des liens URL (Uniform Resource Locator), des éléments de forme (format, paramètres de police, etc.), et tout autre donnée utile à la personnalisation d'un message. Par message (également appelé recommandation) on entend toute forme de communication résultant du traitement des données de connexion et ayant un effet escompté sur la situation.

Tout à fait classiquement, il peut s'agir de messages de compterendu adressés au gestionnaire du site (sous la forme de mails par exemple), mais il peut s'agir surtout de messages destinés à l'utilisateur dont la situation est en cours de traitement. Par exemple, ce peut être un bandeau qui s'affiche la page internet qu'il consulte, un mail, un SMS, etc.

Le ou les moteurs situationnels sont des éléments logiciels choisis parmi une bibliothèque de moteurs situationnels. Chaque moteur situationnel est ainsi apte à mettre en œuvre un traitement donné sur une situation d'un utilisateur (le moteur prend en compte des paramètres de toute la scène et la sphère situationnelles : en effet, si la signature situationnelle d'un utilisateur est unique, la situation identifiée ne l'est pas. La prise en compte des unités d'information, c'est-à-dire des états des indices observés, permet de personnaliser le traitement) de sorte à obtenir un ou plusieurs messages ayant un effet escompté sur la situation.

Un premier exemple de moteur peut mettre en œuvre une recommandation d'un ou plusieurs produits connexes à ceux visités (on oriente vers les situations du magasin). Un deuxième exemple de moteur peut mettre en œuvre une recommandation de produits achetés par des internautes dans une situation similaire à la situation identifiée de l'utilisateur (on est au niveau personnel). Dans un troisième exemple de moteur, on peut tout simplement recommander des produits à la mode (détection d'une hausse des ventes significatives, on est au niveau de la sociologie de groupe).

Il est à noter qu'une même stratégie peut être associée à plusieurs situations et que chaque stratégie peut relever d'un niveau « d'essentialité », c'est-à-dire un critère de priorité qui peut être important en cas de forte affluence d'utilisateurs.

Pour au moins une des stratégies associées avec ladite situation identifiée (on peut les analyser par ordre d'essentialité), les moyens de traitement du serveur 1 mettent en œuvre les moteurs situationnels associés de sorte à obtenir au moins une pile de messages. Avantageusement, on génère au moins deux piles de messages (avantageusement trois), chacun étant associée à un niveau de confidentialité. Par niveau de confidentialité on entend le niveau de publicité du message. Par exemple, dans une mise en œuvre du procédé à deux niveaux de confidentialité, le niveau 1 correspond à des messages personnels, alors que le niveau 2 correspond à des messages globaux (par exemple un bandeau sur le site). Les trois exemples de moteurs décrits précédemment correspondent à trois niveaux de confidentialités distincts : le premier présente un niveau de confidentialité « faible », puisqu'il est destiné à tout utilisateur ; Le deuxième présente un niveau de confidentialité « élevé », puisque la recommandation est personnelle, et n'est donc destinée qu'à l'utilisateur. Le troisième correspond à un niveau de confidentialité « moyen », puisque l'exposition se fait au niveau du groupe. Les trois recommandations produites par ces trois moteurs se retrouveraient donc dans trois piles différentes.

Ces piles de messages sont alors dépilées pour « exposer » les messages, c'est-à-dire les transmettre à leur destinataire. Plus précisément, cela consiste à envoyer à destination (selon le cas) de l'équipement 3 dudit utilisateur et/ou de la plateforme 2 (quand il s'agit d'éléments de pages) un sous-ensemble des messages de ladite au moins une pile de messages.

Ce peut être fait via une simple politique LIFO (Last In First Out, « Dernier Entré, Premier Sorti »), mais avantageusement une stratégie dite à jetons est mise en œuvre. Dans cette stratégie, la page courante comprend des zones d'exposition aptes à recevoir un message dans un format donné et présentant des paramètres donnés. Les zones, lorsqu'elles sont disponibles, émettent un jeton comprenant les différents paramètres de la zone. Un moteur situationnel reçoit le jeton et constitue « sur commande » un ou plusieurs messages en fonction de ces paramètres. Les messages disposant du jeton sont alors extraits de la pile avant les autres.

L'exposition du ou des messages affecte la situation (par exemple en provoquant une transaction si elle a eu l'impact escompté sur l'utilisateur), ce qui a des chances d'activer de nouveaux triggers et d'entraîner le changement de la situation dans laquelle se trouve l'utilisateur. Le procédé est ainsi relancé et l'effet des messages sera observé au prochain cycle d'analyse.

### Optimisation des capacités de traitement

L'activité des internautes n'est pas constante au cours de la journée, et en particulier à des périodes de pics les moyens de traitement de données du serveur 1 peuvent avoir des difficultés à faire face à l'afflux d'information (en d'autres termes le volume du flux à traiter).

Avantageusement le système tient compte de ces variabilités du trafic et régule le procédé. En particulier, le procédé mobilise avantageusement les ressources nécessaires pour identifier les situations de tous les utilisateurs connectés (la première partie du procédé est moins consommatrice de ressources que la seconde), mais n'en analyse qu'une partie selon les capacités disponibles, triés en particulier sur le niveau « d'essentialité » des stratégies mentionné précédemment.

Pour cela, trois niveaux graduels d'activité sont définis (ici appelés « alphafloor », « betafloor » et « gammafloor »), le fonctionnement passant dans un mode dégradé (on laisse tomber certaines situations au-delà d'un seuil) ou différé (des situations jugées intéressantes ne sont pas traités tout de suite à cause de l'engorgement, mais le seront plus tard lorsque l'activité sera plus faible). La précision de l'analyse d'une situation peut également varier en fonction du niveau d'activité : si les ressources manquent on va à l'essentiel (mode essentiellement déductif), et sinon on réalise une analyse précise (mode essentiellement inductif) pour lequel on a plus de réflexe. Dans le cas d'une semi ou non supervisé (voir plus loin), en cas de ressources disponibles on favorise l'apprentissage.

Les trois niveaux précédents sont définis en fonction des niveaux d'activité typiques sur le site en nombre d'actions par seconde.

L'alphafloor correspond à un niveau d'activité « élevé ». Par exemple sur un site où l'on observe jusqu'à 1000 connexions simultanée, en supposant qu'un utilisateur produit un clic (ou tout autre action comme une saisie) toutes les 10 secondes en moyenne, l'alphafloor est à 100 Hz.

Le betafloor correspond à un niveau d'activité « moyen ». Par exemple si sur le même site on observe 100000 connexions par jour et on constate qu'un internaute reste 1 min 30 secondes en moyenne, le betafloor est à 10,4 Hz.

Le gammafloor correspond à un niveau d'activité « faible ». Par exemple, si on observe sur le site un ratio de 1 à 100 entre le maximum et le minimum de connexions simultanées sur une journée (soir un minimum de 10 connexions simultanées à 9 secondes par clic), le gammafloor est à 1,11 Hz.

Dans le cas inverse (plus de capacités de traitement disponibles que nécessaire), le procédé peut utiliser des « Shadows », c'est-à-dire maintenir des situations rémanentes d'anciens utilisateurs, afin d'augmenter la base d'apprentissage.

### Modes semi-supervisé et non-supervisé

Le procédé nécessite un ensemble de situations de référence pour fonctionner, mais cet ensemble n'est pas figé et peut évoluer. En particulier, les stratégies peuvent comporter des moteurs situationnels configurés pour que des messages soient émis pour signaler en particulier à destinataire d'un gestionnaire du site l'émergence d'une nouvelle situation. Le gestionnaire peut décider d'en faire une nouvelle situation de référence.

Dans un mode semi-supervisé, le système suggère au gestionnaire de nouvelles situations de référence (associées à un masque prédéterminé par le moteur situationnel), et ce dernier peut valider ou non ces propositions. Alternativement, dans un mode non-supervisé (tel que celui représenté par la figure 2), le système est complètement automatique et inclut de lui-même les nouvelles situations de référence.

Il est à noter que l'observe l'apparition de nouvelles situations par « bourgeonnement ». En d'autres termes, ce que les moteurs détectent est l'émergence d'une sous-catégorie d'une situation large (par exemple si une part non négligeables des signatures situationnelles correspondant à une situation de référence s'avèrent présenter des états identiques pour des indices qui étaient classés « A », c'est-à-dire non pris en compte dans le masque). Alternativement, pour une situation de référence donnée, on peut tenter de sélectionner les situations qui ont débouché sur une transaction, afin de détecter les messages efficaces.

### Processeurs reflexes

Selon un deuxième aspect, l'invention concerne un système 1, en particulier un serveur 1 comprenant au moins une unité de traitement de données et des moyens de stockage de données, ladite au moins une unité de traitement étant configurée pour la mise en œuvre du procédé selon le premier aspect lors de la connexion d'un utilisateur à une plateforme 2 d'un site via un équipement 3.

Comme l'on a expliqué, le plus souvent le procédé est mis en œuvre par un serveur du site qui est distinct des serveurs qui composent la plateforme 2 (c'est-à-dire les serveurs qui hébergent les pages du site et gèrent le fonctionnement du site), l'équipement 3 de l'utilisateur étant alors connecté audit serveur pour la mise en œuvre du procédé via la plateforme 2.

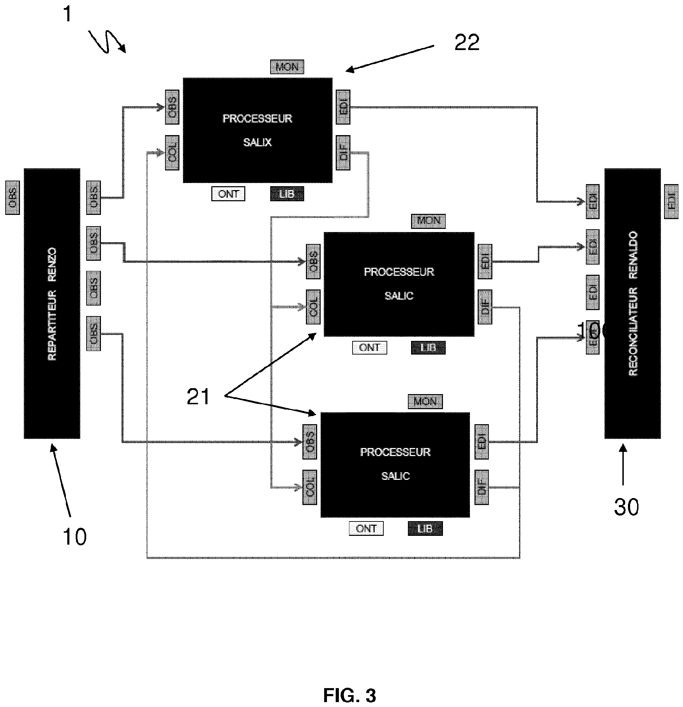

De façon particulièrement préféré, le deuxième aspect de l'invention concerne un système 1 de traitement de données de connexion à une plateforme 2 d'un site Internet dont un mode de réalisation particulièrement préféré est représenté sur la figure 3. Ce système comprend
- au moins deux modules indépendants 21, 22 de traitement de données de connexion (modules « SALI2 » dont SALIX et SALIC sont deux versions), les modules de traitement 21, 22 étant répartis en moins deux groupes complémentaires, les modules 21, 22 d'un groupe étant configurés pour mettre en œuvre un sous-ensemble des opérations nécessaires pour l'exécution d'un procédé de traitement des données de connexion d'un utilisateur à ladite plateforme 2 comprenant l'identification d'une situation de l'utilisateur, les modules de traitement 21 de chaque groupe recevant des données issues des modules de traitement 22 d'un autre groupe de sorte à compléter la totalité du procédé de traitement de données de connexion ;
- un module répartiteur 10 (« RENZO ») qui reçoit lesdites données de connexion et les transmet aux modules de traitement 21, 22 ;
- un module réconciliateur 30 (« RENALDO ») qui collecte les données issues des modules de traitement 21, 22 et délivre des données traitées de connexion à ladite plateforme 2.

Ces modules 10, 21, 22, 30 sont appelés des processeurs réflexes, à cause de leur aptitude à traiter sans a priori les données en entrée.

Le principe est donc d'avoir deux (voire plus) groupes de n modules 21, 22, les modules 21, 22 d'un groupe effectuant en parallèle la même tâche, et les tâches de chacun des groupes étant complémentaires pour réaliser le traitement des données de connexion. Les différents modules 21, 22 peuvent être soit des processeurs physiquement indépendants (et reliés par un bus), chacun disposant de ses moyens de traitement et de son espace de stockage, ou alternativement des briques logicielles mises en œuvre sur un équipement donné, les modules partageant alors des mêmes ressources processeur (éventuellement multi-cœur) et un même espace de stockage. Il est à noter que le système 1 peut être réparti sur plusieurs serveurs voire être installé en cloud-computing sur des machines virtuelles Les modules 21, 22 s'échangent avantageusement des données sous la forme d'un flux dans un langage d'abstraction, par exemple XML (eXtensible Markup Language), JSON (JavaScript Object Notation), le protocole SOAP (Simple Object Access Protocol), Silvia ou encore Mawerick.

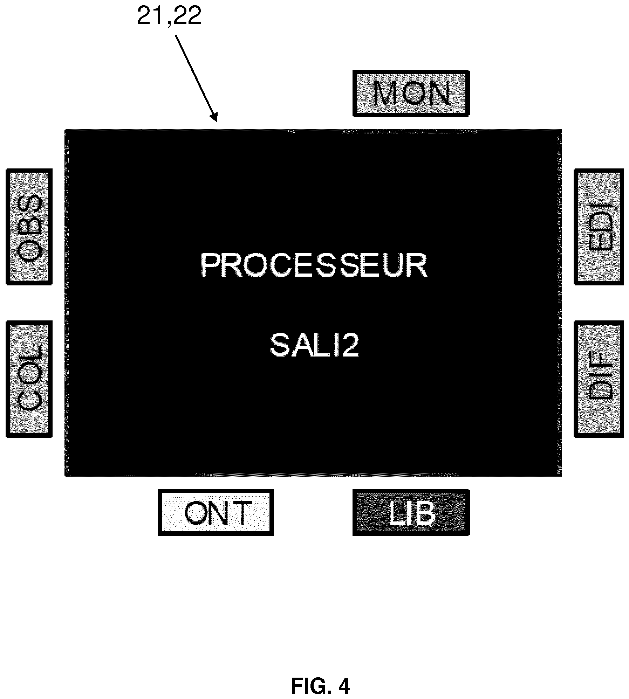

En référence à la figure 4 est représenté schématiquement un module de traitement 21, 22 (indifféremment du groupe) de type SALI2. Comme l'on voit, il possède avantageusement 7 ports d'entrée/sortie. Il est en effet souhaitable que les modules 21, 22 soient connectés à une bibliothèque de moteurs situationnels exécutables et/ou à une base de données contenant une ontologie caractéristique dudit site internet afin de pouvoir mettre en œuvre les étapes de procédé précédemment expliquées.

En particulier :
- Le port OBS (observateur) reçoit les données en provenance de la plateforme 2 sous forme de flux XML ;
- Le port COL (collecteur) reçoit les données en provenance des autres modules de traitement 21, 22 SALI2 sous forme de flux XML ;
- Le port ONT (ontologie) reçoit l'ontologie sous forme de fichier XML ;
- Le port LIB (library) contient les bibliothèques de trackers, thresholds et moteurs situationnels (exécutables) ;
- Le port EDI (éditeur) émet les données de sortie sous forme de flux XML;
- Le port DIF (diffuseur) émet les données à destination des modules de traitement 21, 22 d'autres groupes sous forme de flux XML ;
- Le port MON (monitoring) émet des statistiques.

La répartition des tâches entre les groupes de modules 21, 22 permet une bien meilleure efficacité de traitement par la spécialisation des modules 21, 22, et le fait que chaque groupe soit alimenté en données assure comme on le voit sur la figure 3 un « feedback ». Les résultats d'une partie du traitement permettent d'améliorer l'autre partie de traitement. Plusieurs clés de répartitions possibles entre les groupes de modules de traitement 21, 22 vont être décrites plus loin. Il est à noter qu'il est possible de combiner ces approches : le système 1 peut avoir deux groupes de modules 21, 22 répartis selon une première loi, les modules 21, 22 d'un groupe étant eux même répartis en deux sous-groupes selon une deuxième loi.

Le travail de tri est effectué par le module répartiteur 10. Ce dernier interprète chaque paquet d'information, et l'adresse aux modules de traitement 21, 22 adéquats.

Le module réconciliateur 30 reçoit les flux relatifs à des messages à envoyer en fonction des traitements effectués et s'occupe de la publication de ces messages. Il recompose un flux global à destination de la plateforme 2 du site et/ou de l'équipement 3 de l'utilisateur.

Selon une première variante, les modules de traitement 21 d'un groupe sont des modules de pré-traitement configurés pour identifier les situations d'utilisateurs connectés à ladite plateforme 2, et les modules de traitement 22 d'un autre groupe sont des modules de post-traitement configurés pour traiter des situations identifiées d'utilisateurs connectés. Dans cette configuration particulièrement avantageuse, on a avantageusement un module de pré-traitement 21, et N modules de post-traitement 22 (en particulier 4 ou 8, mais on comprendra qu'on n'est pas limité à ce nombre et que l'on peut en avoir un nombre quelconque), car le traitement des situations obtenues et l'envoi de messages et la partie la plus consommatrice de ressources du procédé.

Le lien de feedback, que l'on voit sur la figure 2, permet que ou les modules de pré-traitement 21 collectent des données issus du ou des modules de post-traitement 22 de sorte à influer sur l'identification des situations. Cela rend possible le mode non-supervisé évoqué précédemment.

Selon une deuxième variante, les modules de traitement 21 d'un groupe mettent en œuvre les opérations en temps réel (les modules de « traitement immédiat »), et les modules 22 d'un autre groupe mettent en œuvre les opérations différées (modules de « traitement différé »). En d'autres termes, certains modules 21 exécutent des tâches nécessitant une action immédiate (par exemple les déclencheurs en lien avec la navigation des utilisateurs, l'envoi de messages à exposition immédiate), alors que les autres modules 22 réalisent des tâches dont l'exécution peut être décalée dans le temps. Les données sont stockées sur les moyens de stockage le temps de pouvoir être traitées. Cette configuration facilite la rémanence des informations et la prise en compte du passé, dans la mesure où à tout instant les modules 21 « temps réel » reçoivent des données relatives à des traitements réalisés en différé (qui sont donc le fruit de données de connexion plus anciennes). La boucle de feedback permet ainsi aux modules de traitement différé 22 de communiquer aux modules de traitement immédiat 21 des « grilles de traitement » via lesquelles le traitement immédiat est adapté. Cette configuration s'adapte en outre très bien aux périodes de forte affluence en transférant des données de traitement immédiat à traitement différé.

Il s'agit du système représenté sur la figure 3 : le « SALIX » est le module de traitement différé 22, et les « SALIC » sont les modules de traitement immédiat 21. Dans cette configuration particulièrement avantageuse, on a avantageusement un module de traitement différé 22, et N modules de traitement immédiat 21 (le traitement immédiat a la priorité, et est plus consommateur puisque une certaine partie des traitements ne peuvent être faits en différés). Dans une configuration à 4 modules de traitement immédiat 21, on a alors au total 7 modules 10, 21, 22, 30, un processeur octo-cœur est donc particulièrement préféré (le huitième cœur gérant le reste des opérations systèmes).

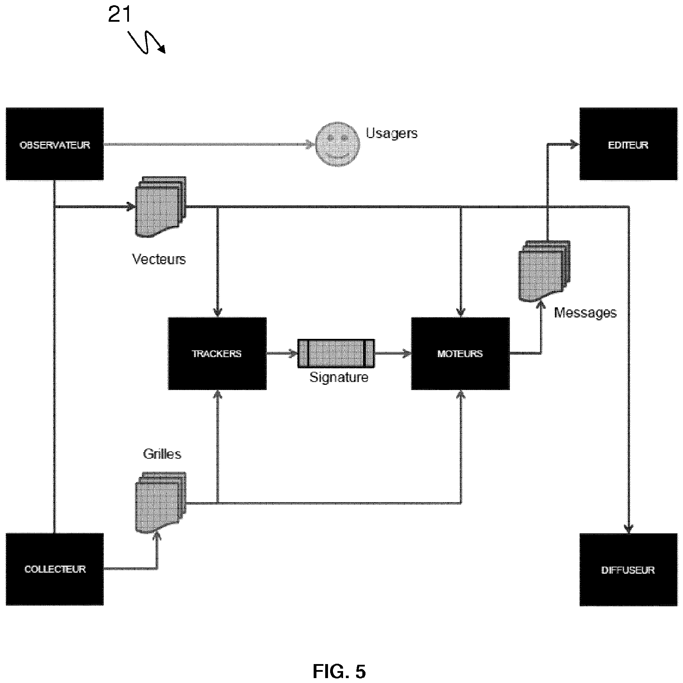

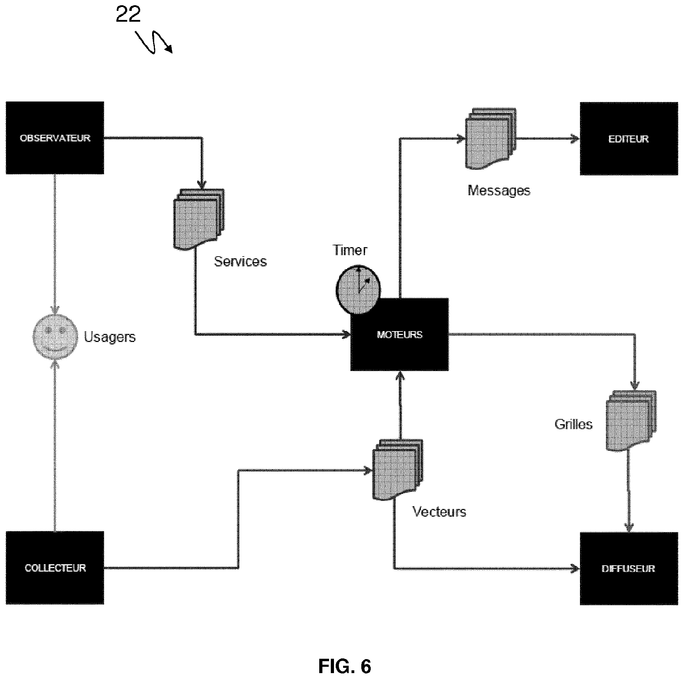

Les figures 5 et 6 représentent plus en détail respectivement un module de traitement immédiat 21 de type SALIC et un module de traitement différé 22 de type SALIX. Sur ces figures on voit les ports OBS, COLL, EDI et DIF (les ports ONT, LIB et MON sont câblés de façon similaire entre les deux types de module).

Un module de traitement immédiat 21 SALIC s'occupe d'identifier toutes les situations des utilisateurs (à réaliser en temps immédiat) via les vecteurs de consultation, sélection, consommation (qui comprennent les données observées pour déterminer les états des indices) reçus par le port observateur.

Le port diffuseur transmet les vecteurs au module de traitement différé 22 SALIX. Le port collecteur réceptionne les vecteurs d'information traitée en différé et les grilles en provenance du module de traitement différé 22 SALIX.

Les trackers (ainsi que les thresholds) génèrent les signatures situationnelles à partir des vecteurs et des grilles. Les moteurs situationnels temps réel associés aux stratégies des situations identifiées sont exécutés, et les messages produits par l'exécution des moteurs envoyés via le port éditeur.

Un module de traitement différé 22 SALIX s'occupe quant à lui des traitements qui n'ont pas besoin d'être faits tout de suite. Le port observateur reçoit exclusivement des données relatives aux services et aux usagers administrateurs. Le port collecteur réceptionne les vecteurs en provenance des modules de traitement immédiat 21 SALIC. Des moteurs situationnels sont mis en œuvre sous le contrôle d'un timer (minuteur) qui définit à quel point le traitement est différé.

Ces moteurs produisent les messages différés (messages à destination des utilisateurs étant envoyés quelques heures suivant sa visite par exemple sous la forme d'un e-mail promotionnel l'incitant à revenir sur le site) et les messages pour les administrateurs du site qui sont émis à destination des supports adéquats via le port éditeur, ainsi que les grilles de traitement qui comme expliqué sont renvoyées (avec certains vecteurs) vers les modules de traitement immédiat 21 SALIC via le port diffuseur.

Selon une troisième variante, chaque groupe de modules 21, 22 correspond à une « ligne de services ». Il s'agit d'une unité de base de classification de produits au sein d'un site internet au sein du système dit « LSO » pour Lignes/Services/Options. Une ligne de services regroupe plusieurs services. Par exemple la catégorie « Salon » qui va regrouper des services « Tables », « Meubles TV », « Canapés », etc. dans un catalogue de meubles est une ligne de services. De même, la catégorie « Homme », ou « Taille XL » est une ligne de services d'un catalogue de vêtements. Sur un site internet tel un site marchand, on note qu'il est possible de présenter les mêmes produits sous plusieurs modes de classifications, il s'agit alors de lignes de services différentes. Chaque service présente des options. Dans l'exemple précédent, un service « Pantalons » d'une ligne « Homme » contiendra une liste d'options qui sont autant de modèles de pantalons. Chaque option présente un produit avec plusieurs variantes (taille, couleurs, etc.) ; chaque produit est en effet unique (référence catalogue donné), contrairement à l'option. Un même produit peut donc être présenté dans plusieurs contextes LSO. Pour revenir à notre exemple, on peut retrouver le même pantalon dans le service « Pantalons homme » de la ligne « XL ».

On peut ainsi envisager de séparer les modules de traitement 21, 22 par ligne de services, en particulier pour des sites présentant des produits très divers pour lesquels les situations des utilisateurs vont être très différentes. Il est à noter qu'il est courant pour des gros sites que l'utilisateur soit redirigé vers l'un ou l'autre des serveurs de la plateforme 2 selon la ligne de services sur laquelle il navigue.

En outre, de façon avantageuse, on combine plusieurs de ces variantes. En particulier, les modules de traitement immédiat 21 SALIC de la deuxième variante peuvent être chacun dédié à une ou plusieurs lignes de services. Dans ce cas, le module répartiteur 10 RENZO repartit le flux entrant en le dirigeant vers le module de traitement différé 22 SALIX s'il s'agit de données d'administration ou vers un module de traitement immédiat 21 SALIC s'il s'agit de données de navigation d'un utilisateur, en fonction de la ligne de services dans laquelle il se trouve.

## Revendications

1. Procédé de traitement de données par un serveur (1) comprenant au moins une unité de traitement de données et des moyens de stockage de données, le procédé étant **caractérisé en ce qu'**il comprend, suite à une activation d'au moins un déclencheur mis en œuvre par la ou les unités de traitement, le ou lesdits déclencheurs étant apte à s'activer en réponse à un événement prédéfini, des étapes de :
(a) tentative de détermination par la ou les unités de traitement d'un état d'au moins un indice choisi en fonction du déclencheur activé parmi un ensemble d'indices observables relatifs à des données personnelles d'un utilisateur et/ou relatifs à des données générales ;
(b) génération et stockage sur les moyens de stockage d'une signature situationnelle de l'utilisateur en fonction des résultats de ladite tentative de détermination de l'état d'au moins un indice, ladite signature situationnelle est composée d'une pluralité d'unités d'information, chacune étant associée à un indice, chaque unité d'information pouvant prendre au moins trois valeurs dont une première valeur si l'état déterminé de l'indice associé correspond à un état de référence, une deuxième valeur si l'état déterminé de l'indice associé ne correspond pas à l'état de référence, et une troisième valeur si l'état de l'indice associé n'a pas pu être déterminé lors de l'étape (a) ;
(c) comparaison de ladite signature situationnelle de l'utilisateur avec une pluralité de masques, chaque masque étant associé à une situation de référence et correspondant à un espace de signatures situationnelles, de sorte à identifier la situation dudit utilisateur comme étant la situation de référence associée à au moins un masque contenant ladite signature situationnelle, au moins une stratégie étant associée à chaque situation de référence, chaque stratégie comprenant un ou plusieurs moteurs situationnels choisis parmi une bibliothèque de moteurs situationnels, chaque moteur situationnel étant apte à mettre en œuvre un traitement donné sur une situation d'un utilisateur de sorte à obtenir un message ayant un effet escompté sur la situation ;
(d) analyse de ladite situation identifiée de l'utilisateur par des moyens physiques ou logiques d'analyse situationnelle du serveur (1) de sorte à obtenir des données traitées, comprenant la mise en œuvre, pour au moins une des stratégies associées avec ladite situation identifiée, des moteurs situationnels de ladite stratégie sur ladite situation de sorte à obtenir au moins une pile de messages.

2. Procédé selon l'une des revendications précédentes, dans lequel la signature situationnelle comprend deux parties dont une première partie dédiée aux indices observables relatifs à des données personnelles dudit utilisateur, et une deuxième partie dédiée aux indices observables relatifs à des données générales.

3. Procédé selon l'une des revendications précédentes, dans lequel l'ensemble des situations de référence est modifié en fonction de messages de la pile de sorte à améliorer l'identification des situations d'utilisateurs.

4. Procédé selon l'une des revendications précédentes, dans lequel lesdites données sont des données de connexion à une plateforme (2) d'un site Internet, le ou lesdits événements prédéfinis en réponse auxquels un déclencheur peut être activé survenant lors de la connexion dudit utilisateur à ladite plateforme (2) via un équipement (3).

5. Procédé selon la revendication Z 4, Z **caractérisé en ce qu'**il est mis en œuvre pour une pluralité d'utilisateurs connectés à la plateforme (2) via un équipement (3).

6. Procédé selon la revendication Z 5, Z dans lequel les étapes (a) à (c) sont mises en œuvre pour chacun des utilisateurs connectés à la plateforme (2) via un équipement (3) de sorte à identifier une situation pour chaque utilisateur, tout ou partie des situations identifiées étant analysées à l'étape (d) en fonction de la capacité desdits moyens physiques ou logiques d'analyse situationnelle du serveur (1).

7. Serveur (1) comprenant au moins une unité de traitement de données et des moyens de stockage de données, ladite au moins une unité de traitement étant configurée pour la mise en œuvre du procédé selon l'une des revendications 4 à 6 lors de la connexion d'un utilisateur à la plateforme (2) d'un site internet via un équipement (3), le serveur (1) étant en connexion avec ladite plateforme (2).

## Patentansprüche

1. Verfahren zum Verarbeiten von Daten durch einen Server (1), umfassend mindestens eine Datenverarbeitungseinheit und ein Datenspeichermittel, wobei das Verfahren **dadurch gekennzeichnet ist, dass** es nach einer Aktivierung mindestens eines von der oder den Verarbeitungseinheiten implementierten Auslösers, wobei der oder die Auslöser ausgelegt sind, sich als Reaktion auf ein vordefiniertes Ereignis zu aktivieren, die folgenden Schritte umfasst:
(a) Versuchen der Verarbeitungseinheit(en), einen Zustand mindestens eines Index zu bestimmen, der in Abhängigkeit von dem aktiven Auslöser aus einem Satz von beobachtbaren Indizes ausgewählt wird, die sich auf personenbezogene Daten eines Benutzers beziehen und/oder sich auf allgemeine Daten beziehen;
(b) Generieren und Speichern einer Situationssignatur des Benutzers auf dem Speichermittel in Abhängigkeit von den Ergebnissen des Versuchs, den Zustand mindestens eines Index zu bestimmen, wobei die Situationssignatur aus einer Vielzahl von Informationseinheiten besteht, die jeweils einem Index zugeordnet sind, wobei jede Informationseinheit mindestens drei Werte annehmen kann, davon einen ersten Wert, wenn der bestimmte Zustand des zugeordneten Index einem Referenzzustand entspricht, einen zweiten Wert, wenn der bestimmte Zustand des zugeordneten Index nicht dem Referenzzustand entspricht, und einen dritten Wert, wenn der Zustand des zugeordneten Index bei Schritt (a) nicht bestimmt werden konnte;
(c) Vergleichen der Situationssignatur des Benutzers mit einer Vielzahl von Masken, wobei jede Maske einer Referenzsituation zugeordnet ist und einem Bereich von Situationssignaturen entspricht, um die Situation des Benutzers als die Referenzsituation, die mindestens einer die Situationssignatur enthaltenden Maske zugeordnet ist, zu identifizieren, wobei mindestens eine Strategie jeder Referenzsituation zugeordnet ist, wobei jede Strategie eine oder mehrere Situations-Engines ausgewählt aus einer Bibliothek von Situations-Engines umfasst, wobei jede Situations-Engine ausgelegt ist, um eine jeweilige Verarbeitung einer Situation eines Benutzers zu implementieren, um eine Nachricht zu erhalten, die eine gewünschte Auswirkung auf die Situation hat;
(d) Analysieren der identifizierten Situation des Benutzers durch physische oder logische Mittel zur Situationsanalyse des Servers (1), um verarbeitete Daten einschließlich der Implementierung der Situations-Engines der Strategie auf die Situation für mindestens eine der mit dieser identifizierten Situation verbundenen Strategien zu erhalten, um mindestens einen Nachrichtenstapel zu erhalten.

2. Verfahren nach einem der vorhergehenden Ansprüche, wobei die Situationssignatur zwei Teile umfasst, darunter einen ersten Teil, der zu beobachtbaren Indizes gehört, die sich auf personenbezogene Daten des Benutzers beziehen, und einen zweiten Teil, der zu beobachtbaren Indizes gehört, die sich auf allgemeine Daten beziehen.

3. Verfahren nach einem der vorhergehenden Ansprüche, wobei der Satz von Referenzsituationen in Abhängigkeit von Nachrichten aus dem Stapel modifiziert wird, um die Identifizierung von Benutzersituationen zu verbessern.

4. Verfahren nach einem der vorhergehenden Ansprüche, wobei die Daten Verbindungsdaten zu einer Plattform (2) von einer Website sind, wobei das bzw. die vordefinierten Ereignisse, auf die als Reaktion ein Auslöser aktiviert werden kann, bei Verbindung des Benutzers mit der Plattform (2) über ein Gerät (3) auftreten.

5. Verfahren nach Anspruch 4, **dadurch gekennzeichnet, dass** es für eine Vielzahl von mit der Plattform (2) über ein Gerät (3) verbundene Benutzer implementiert wird.

6. Verfahren nach Anspruch 5, wobei die Schritte (a) bis (c) für jeden der mit der Plattform (2) über ein Gerät (3) verbundenen Benutzer implementiert werden, um eine Situation für jeden Benutzer zu identifizieren, wobei alle oder ein Teil der identifizierten Situationen im Schritt (d) in Abhängigkeit von der Kapazität der physischen oder logischen Mittel zur Situationsanalyse des Servers (1) analysiert werden.

7. Server (1), der mindestens eine Datenverarbeitungseinheit und ein Datenspeichermittel umfasst, wobei die mindestens eine Verarbeitungseinheit für die Implementierung des Verfahrens nach einem der Ansprüche 4 bis 6 bei Verbindung eines Benutzers mit der Plattform (2) einer Website über ein Gerät (3) konfiguriert ist, wobei der Server (1) mit der Plattform (2) in Verbindung steht.

## Claims

1. A data-processing method by a server (1) comprising at least one data-processing unit and data-storage means, the method being **characterized in that** following activation of at least one trigger executed by the processing unit(s), said trigger(s) being capable of activating in response to a predefined event, it comprises steps of:
(a) attempt to determine via the processing unit(s) a state of at least one index selected as a function of the trigger activated from a set of observable indices relative to the personal data of a user and/or relative to general data;
(b) generation and storage on the storage means of a situational signature of the user as a function of the results of said attempt to determine the state of at least one index, wherein a situational signature comprises a plurality of information units, each being associated with an index, each information unit able to take on at least three values including a first value if the determined state of the associated index corresponds to a reference state, a second value if the determined state of the associated index does not correspond to the reference state, and a third value if the state of the associated index could not be determined during step (a);
(c) comparison of said situational signature of the user with a plurality of masks, each mask being associated with a reference situation and corresponding to a space of situational signatures so as to identify the situation of said user as being the reference situation associated with at least one mask containing said situational signature, wherein at least one strategy is associated with each reference situation, each strategy comprising one or more situational motors selected from a library of situational motors, each situational motor being capable of executing given processing on a situation of a user so as to obtain a message having an expected effect on the situation;
(d) analysis of said identified situation of the user by physical or logical means of situational analysis of the server (1) so as to obtain processed data, comprising the running for at least one of the strategies associated with said identified situation, situational motors of said strategy on said situation so as to obtain at least one stack of messages.

2. The method according to the preceding claim, wherein the situational signature comprises two parts including a first part dedicated to the observable indices relative to personal data of said user, and a second part dedicated to the observable indices relative to general data.

3. The method according to any one of the preceding claims, wherein the set of reference situations is modified as a function of messages of the stack so as to improve identification of the situations of users.

4. The method according to any one of the preceding claims, wherein said data are connection data to a platform (2) of an Internet site, said predefined event(s) in response to which a trigger can be activated occurring during connection of said user to said platform (2) via equipment (3) .

5. The method according to claim 4, **characterized in that** the method is executed for a plurality of users connected to the platform (2) via an equipment (3)

6. The method according to claim 5, wherein steps (a) to (c) are executed for each of the users connected to the platform (2) via an equipment (3) so as to identify a situation for each user, all or some of the situations identified being analyzed in step (d) as a function of the capacity of said physical or logical means of situational analysis of the server (1).

7. A server (1) comprising at least one data-processing unit and data-storage means, said at least one processing unit being configured to execute the method according to any one of claims 4 to 6, during connection of a user to the platform (2) of an Internet site via an equipment (3), the server (1) being in connection with said platform (2).
